# EUROPEAN PATENT SPECIFICATION

(11) **EP 4 215 349 B1**
(45) Date of publication and mention of the grant of the patent: **02.09.2026**
(21) Application number: 22217184.5
(22) Date of filing: 29.12.2022
(51) Int. Cl.: B29C 35/02, B29C 73/10, B29C 73/34

(54) **RESISTANCE REPAIR OF THERMOPLASTIC COMPONENTS**
REPARATUR VON THERMOPLASTISCHEN KOMPONENTEN DURCH WIDERSTANDSHEIZUNG
RÉPARATION PAR RÉSISTANCE DE COMPOSANTS THERMOPLASTIQUES

(30) Priority: 30.12.2021 US 202117566284
(43) Date of publication of application: 26.07.2023
(73) Proprietor: Rohr, Inc., Chula Vista, CA 91910-2098 (US)
(72) Inventor: Bahramshahi, Noushin, Mission Viejo, CA 92692 (US); van Tooren, Michael, San Diego, CA 92122 (US); Ursenbach, Daniel, Caledonia, IL 61011 (US)
(74) Representative: Dehns

(56) References cited:
- DE-U1- 202007 013 755
- US-A1- 2016 039 157
- US-B1- 8 980 029
- US-B2- 10 343 761
- US-B2- 9 422 733

## Description

### BACKGROUND OF THE INVENTION

### 1. Technical Field

The present disclosure (invention) relates to methods for repairing thermoplastic components.

### 2. Background Information

Components made from thermoplastic materials are increasingly in demand in the aircraft and other industries as a result of the wide-ranging advantages of the materials. Thermoplastic materials can be used to form lightweight and high-strength structures having complex shapes. In addition, thermoplastic materials, as compared to thermoset materials, offer practically infinite shelf life, faster cycle time, the ability to be recycled/reformed, improved damage tolerance properties, as well as moisture and chemical resistance.

However, widespread adoption of thermoplastic materials in some industries, such as the aircraft industry, has been limited as a result of challenges with thermoplastic component manufacturing and repair. For example, some existing repairs utilize pressure and or heat applied from both sides of the component to be repaired. Very often component geometry will not permit the application of pressure and/or heat applied from both sides. In addition, some current methods of joining thermoplastic components use adhesives or thermoplastic films to join two or more components, thereby forming joints between the two or more components which may exhibit reduced structural strength. Accordingly, improved methods for manufacturing and repairing thermoplastic components which meet industry, safety, airworthiness, and fast throughput requirements are desirable to support industry's increased production rates.

US 10 343 761 B2 discloses a method and apparatus for repairing a damaged portion in a repair target.

### SUMMARY OF THE INVENTION

According to an aspect of the present invention, a method of repairing a defect region of a thermoplastic component is as claimed in claim 1.

According to another aspect of the present invention, a system for repairing a defect region of a thermoplastic component is as claimed in claim 15.

The following optional features may be applied to any of the above aspects.

Optionally, the at least one TP surface of the patch may be configured to mate with the at least one TC surface of the defect region of the thermoplastic component.

Optionally, the step of providing the patch may include producing the patch with a geometric configuration that mates with a void in the defect region of the thermoplastic component.

Optionally, the method may further include preparing the defect region of the thermoplastic component to form the at least one TC surface of the defect region.

Optionally, the step of preparing the defect region of the thermoplastic component to form the at least one TC surface of the defect region, may include producing a void in the defect region of the thermoplastic component having a first geometric configuration that mates with a second geometric configuration of the patch.

Optionally, the localized force may be applied to a surface of the patch.

Optionally, the localized force may be produced by a weighted object resting on the surface of the patch.

Optionally, the heating element may include a metallic material.

Optionally, the heating element may include a metallic material configured as a mesh.

Optionally, the heating element energy source may be configured to selectively directly provide electrical energy to the heating element.

Optionally, the heating element energy source may be configured to selectively indirectly provide electrical energy to the heating element.

Optionally, the patch may be configured as a homogeneous body.

Optionally, the patch may include a plurality of layers.

Optionally, the step of providing the patch may include stacking individual plies within a void disposed in the defect region of the thermoplastic component, and one or more of the individual plies may be configured to mate with the void disposed in the defect region.

Optionally, the heating element may include a second portion that is exposed when the at least one TP surface of the patch is forced toward the at least one TC surface of the defect region of the thermoplastic component.

Optionally, the first portion of the heating element may be configured to mate with a void disposed in the defect region of the thermoplastic component.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, that the following description and drawings are intended to be exemplary in nature and non-limiting.

### BRIEF DESCRIPTION OF THE DRAWINGS

FIG. 1 is a perspective view of an exemplary aircraft nacelle.
FIG. 2 diagrammatically shows a thermoplastic component having a defect region exposed on a surface, and a thermoplastic patch disposed above the defect region.
FIG. 3 shows the thermoplastic component having a defect region and a thermoplastic patch as shown in FIG. 2, and further includes a heating element and an object to provide a localized force.
FIG. 4 diagrammatically illustrates a portion of a thermoplastic component having a defect region (e.g., a crack) exposed on a surface of the thermoplastic component.
FIG. 5 diagrammatically illustrates the portion of a thermoplastic component shown in FIG. 4, now processed for repair and a heating element and a thermoplastic patch.
FIG. 6 diagrammatically illustrates the portion of a thermoplastic component shown in FIG. 5 with the heating element and patch disposed within the prepared defect region with localized force applied.

### DETAILED DESCRIPTION

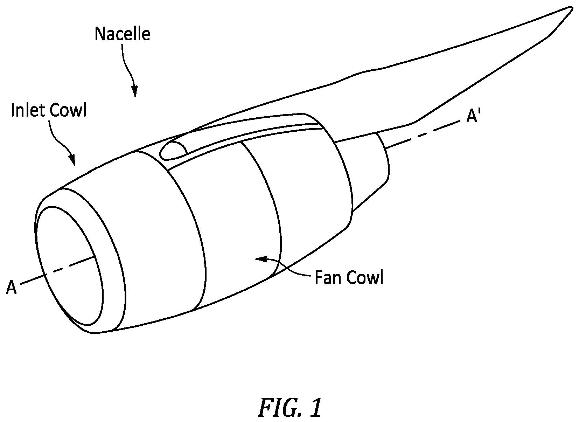

Components made from thermoplastic composite materials are utilized in a variety of different applications, including but not limited to aircraft nacelle components; e.g., nacelle inlet cowls, fan cowls and the like. As may be expected, from time to time these thermoplastic components will have defects produced during manufacturing or incurred during use that would benefit from repair. Aspects of the present disclosure include a new, unobvious method for repairing such thermoplastic components. To facilitate the description herein, the present disclosure repair method will be described in terms of repairing a thermoplastic component of an aircraft nacelle, but the applicability of the present method is not limited to any particular type of thermoplastic component unless otherwise indicated herein. FIG. 1 diagrammatically illustrates an aircraft nacelle having thermoplastic components that may be repaired using the present disclosure repair method; e.g., an inlet cowl and/or a fan cowl. The term "thermoplastic component 20" as used herein includes components that consist entirely of a thermoplastic material, as well as components that do not consist entirely of a thermoplastic material; e.g., a component that comprises at least one thermoplastic element and at least one non-thermoplastic element (e.g., a metallic element, etc.). In the latter instance, the present disclosure repair can be used to repair the thermoplastic element of the multi-element component. The present disclosure method for repairing a thermoplastic component 20 can be used to repair a new thermoplastic component or a used thermoplastic component. A new thermoplastic component, for example, may be formed with a defect (e.g., a region including an undesirable void, or a crack, or a pit, or excess porosity, or a region having an undesirable polymeric constituency, or a delamination, etc., or any combination thereof) or may be damaged during the manufacturing process, which damage produces the aforesaid defect. A used thermoplastic component, on the other hand, may have an area that is worn or eroded over time, or mechanically, thermally, and/or chemically deformed or altered during use, or the like, or any combination thereof. To facilitate the description herein, the term "defect" will be used herein to mean any volumetric region or surface area of a thermoplastic component 20 that a user wishes to remove for any reason (e.g., for structural reasons, for cosmetic reasons, for improvement, or the like) and replaced with a substitute volume of a thermoplastic material (i.e., a "thermoplastic patch 26"), or a worn or eroded area that needs to be rebuilt. The thermoplastic component defect region 22 will be defined by one or more contact surfaces ("TC contact surfaces 24"). The TC contact surfaces 24 define the thermoplastic component defect region 22 as will be described in greater detail below. The maximum acceptable size of a thermoplastic patch 26 likely will be dictated by the thermoplastic component 20; e.g., any thermoplastic patch 26 of a size that does not detrimentally affect the performance or useful life of the thermoplastic component 20 may be considered. As will be described below, the thermoplastic patch 26 may be formed in a variety of different ways.

As will be detailed below, the present disclosure method includes the use of a thermoplastic patch 26 and a heating element 28. During the repair process, the heating element 28 is disposed between the region 22 of the thermoplastic component 20 to be repaired and the thermoplastic patch 26. Present disclosure repair method steps are described hereinafter.

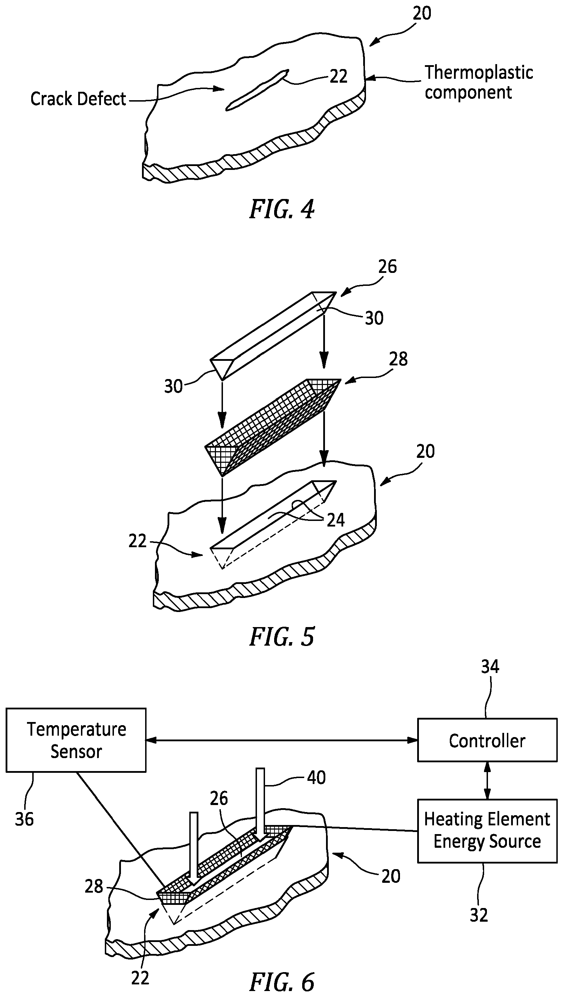

The present disclosure repair method may or may not include a defect region 22 preparation step. In some instances, a defect region 22 of a thermoplastic component 20 may not require any preparation prior to accepting a thermoplastic patch 26. For example, if the defect is a void (e.g., a pit, a crack, a gouge, an indentation, etc.) exposed on a surface of the thermoplastic component 20 and the configuration of the void lends itself to receiving a thermoplastic patch 26 no defect preparation may be needed. In other instances, the defect region 22 of the thermoplastic component 20 may benefit from some amount of preparation prior to accepting a thermoplastic patch 26. For example, the defect region 22 of the thermoplastic component 20 may benefit from a cleaning process that cleans the defect of debris and/or contaminants that will negatively affect the repair process. As another example, a void having a narrow portion (e.g., a narrow crack) may benefit from a preparation process that removes material to open the narrow portion sufficiently to receive thermoplastic patch 26 material and/or to eliminate a crack propagation site. As another example, a void having a portion that is partially covered may benefit from a preparation process that removes material to uncover the covered defect portion to facilitate the receipt of thermoplastic patch 26 material. As another example, a defect region 22 of a thermoplastic component 20 in the form of unacceptable porous material may benefit from a preparation process that removes the porous material. As another example, a defect region 22 of a thermoplastic component 20 containing a delamination may benefit from a preparation process that removes the delaminated portion of the thermoplastic component 20. In some instances, the preparation process may include altering the surface properties of the defect (e.g., smooth a rough surface or roughen a smooth surface) to facilitate the repair process. The present disclosure is not limited to any particular process for preparing the defect for the repair process and the particular preparation process(es) may vary depending on the material of the thermoplastic component 20 and the nature of the defect. In some instances, the preparation process may include a plurality of steps; e.g., a first cleaning, a material removal process, a surface preparation process, a final cleaning, etc. The above preparation process examples are provided as illustrative examples and the present disclosure is not limited to these particular preparation processes. The thermoplastic patch 26, regardless of its geometric configuration, includes one or more surfaces ("TP contact surfaces"; e.g., see TP contact surfaces 30 shown in FIG. 5) that are placed in close proximity to the TC contact surfaces 24 during the repair.

A thermoplastic component 20 repairable under the present disclosure may comprise a variety of different thermoplastic materials. As stated above, thermoplastic components are used in a variety of different applications that dictate different mechanical strength requirements, rigidity or flexibility requirements, thermal environment requirements, or the like, or any combination thereof. Hence, the material comprising the thermoplastic component 20 is chosen to satisfy those requirements. The present disclosure repair process may be used with a wide variety of such thermoplastic materials and therefore has broad applicability. In terms of an aircraft nacelle component, low melt (LM) polyaryletherketone ("PAEK") and polyether ether ketone ("PEEK") are nonlimiting examples of thermoplastic materials that may be used within a thermoplastic component 20.

The thermoplastic patch 26 may comprise one or more thermoplastic materials. The thermoplastic material(s) comprising the thermoplastic patch 26 preferably, but not necessarily, has a lower melting temperature than the material of the thermoplastic component defect region 22 to be repaired. For example, if the thermoplastic component defect region 22 comprises a first melting temperature (e.g., X°C), then a thermoplastic patch 26 may comprise a thermoplastic material having a second melting temperature (e.g., Y°C) lower than the first melting temperature (i.e., X > Y). As a specific non-limiting example, if the material of the thermoplastic component defect region 22 to be repaired comprises a PAEK or PEEK polymer (melt temperature ~ 350°C), then a thermoplastic patch 26 may comprise a thermoplastic material such as polyphenylene sulfide ("PPS" - melt temperature ~ 280°C). In some embodiments, the thermoplastic patch 26 may comprise the same material as the thermoplastic component 20. For example, a thermoplastic patch 26 comprising the same material as the thermoplastic component 20 may be heat treated so that its solid state is less semi-crystalline that the thermoplastic component 20, or alternatively has an amorphous structure. A thermoplastic patch 26 with a semi-crystalline or amorphous structure can be configured as conformable relative to the defect region 22 and will "flow" relative to the geometry of the defect region 22 to create intimate contact there between. The solid state for the thermoplastic patch can be enforced by quenching the thermoplastic patch 26 from the melt after thermoforming the patch 26. In some embodiments, a dissolved thermoplastic material may be disposed between defect region 22 and the thermoplastic patch 26 to facilitate filling the interface between the damage region 22 and the thermoplastic patch 26. The present disclosure is not limited to any particular type of thermoplastic patch 26 material. In some embodiments, the material of the thermoplastic patch 26 may be chosen in view of the material of the thermoplastic component defect region 22 to be repaired. For example, if the material of the thermoplastic component defect region 22 to be repaired is a homogenous material (e.g., unlayered), then the thermoplastic patch 26 may be configured as a homogenous material. As another example, if the material of the thermoplastic component defect region 22 to be repaired is a layered composite, then the thermoplastic patch 26 may be configured as a layered composite; e.g., a stack of layers that is acceptable (layer thicknesses, materials, orientation, etc.) in view of the layered configuration of the defect region 22. Thermoplastic patches 26 according to the present disclosure are not limited to any particular configuration; e.g., layered, unlayered, homogenous, fiber-reinforced, etc.

In those instances where the defect region 22 of the thermoplastic component 20 to be repaired is a void, the geometric configuration of the thermoplastic patch 26 is typically chosen to entirely fill the void and thereby enable the surface of the thermoplastic component 20 being repaired to be returned to a continuous surface. In some embodiments, the thermoplastic patch 26 may be prepared with a geometric configuration that mates with the geometric configuration of the defect region 22 of the thermoplastic component 20 to be repaired. For example, and referring to FIGS. 4-6, if the defect region 22 of the thermoplastic component 20 to be repaired has a "V" shape that extends a lengthwise distance, the thermoplastic patch 26 may be geometrically configured with a V-shape and a length that can be received within and that mates with the V-shaped defect region 22 of the thermoplastic component 20. As another example, if the defect region 22 of the thermoplastic component 20 to be repaired has a semi-circular shape that extends a lengthwise distance, the thermoplastic patch 26 may be geometrically configured with a semi-circular shape and a length that can be received within and that mates with the semi-circular shaped defect region 22 of the thermoplastic component 20. As yet another example, if the defect region 22 of the thermoplastic component 20 to be repaired has a partial spherical shape, the thermoplastic patch 26 may be geometrically configured with a partial spherical shape that can be received within and that mates with the semi-circular shaped defect region 22 of the thermoplastic component 20. The above examples of thermoplastic geometric configuration are provided to illustrate the present disclosure and the present disclosure is not limited thereto. In those embodiments where the thermoplastic patch 26 is intended to fill a void, the thermoplastic patch 26 mating geometry may account for the geometry (e.g., the thickness) of the heating element 28 that will be disposed between the thermoplastic patch 26 and the defect region 22; e.g., because some amount of the patch material will likely migrate through apertures/perforations of the heating element 28 during the repair process (as will be described below), the thermoplastic patch 26 may be slightly oversized to ensure the void is entirely filled upon completion.

In some instances, the geometric configuration of the thermoplastic patch 26 used to fill a void may be specifically tailored to a uniquely configured void geometry. In other instances, thermoplastic patches 26 may be prepared with predetermined (i.e., "stock") geometric configurations that can be used for regularly occurring voids shapes, or a preparation process may be utilized to prepare the void to have a geometry that mates with a predetermined patch 26 configuration. In some embodiments, the thermoplastic patch 26 may not be pre-formed but may rather be "assembled" within the defect region 22, for example by stacking individual plies of patch material collectively geometrically configured to produce the desired patch 26 configuration.

In some instances where the defect region 22 of the thermoplastic component 20 to be repaired is a shallow depression, or a worn or eroded area that needs to be rebuilt, or the like, an acceptable thermoplastic patch 26 may be used that has a generic geometric configuration; e.g., a stock geometric configuration that upon application of force fills the shallow depression, or that provides the requisite material necessary to rebuild the worn or eroded region 22. After the repair is completed, any excess material of the stock patch 26 configuration can be removed.

In some embodiments, the present disclosure repair method includes disposing a heating element 28 between the TC contact surfaces 24 and the TP contact surfaces 30. The heating element 28 is operable to produce sufficient thermal energy to raise at least a portion of the thermoplastic patch 26 to an elevated temperature sufficient to permit bonding between the TC contact surfaces 24 and the TP contact surfaces 30. The heating element 28 has a perforated (or porous) configuration that allows the passage of thermoplastic patch material to migrate through the perforations (openings) in the heating element 28 and into contact with the TC contact surfaces 24 defining the defect region 22. A screen-like (e.g., a mesh, a scrim, or the like) material is a non-limiting example of a material that may be used to form the heating element 28. The heating element 28 may be configured to produce thermal energy as a result of direct electrical energy input or as a result of electromagnetic field input into the heating element 28, either of which inputs produces thermal energy due to electrical resistance within the heating element 28. The energy input may be provided by a heating element energy source 32; e.g., configured to produce the electrical energy input directly to the heating element 28 or the electromagnetic field input indirectly into the heating element 28. The energy input to the heating element 28 that produces the thermal energy may be manually controlled or controlled in an automated manner. The heating element 28 may be comprised of a metallic material that produces the desired resistance thermal energy output as a result of the aforesaid energy input. Non-limiting examples of heating element 28 materials that may be used include stainless steel and copper. In some embodiments, the heating element 28 may be comprised of a non-metallic material or a composite material having a non-metallic matrix that includes elements (e.g., carbon fibers and the like) that may produce the desired resistance thermal energy output as a result of the aforesaid energy input. Preferably, the heating element material is non-reactive with the thermoplastic component 20 material and the thermoplastic patch material, and also substantially inert with any other elements to which the heating element 28 may be exposed during the repair process or in the environment in which the repaired thermoplastic component 20 is designed to be used. The heating element 28 may be pre-conformed to mate with the TC contact surfaces 24 defining the defect region 22 or may be sufficiently flexible to conform to the TC contact surfaces 24 defining the defect region 22, or some combination thereof. In some embodiments, the thermal energy used to join the thermoplastic patch 26 and the defect region 22 of the thermoplastic component 20 together may be provided by an electrically powered and/or an electromagnetically activated heating structure (e.g., a heating blanket). In some embodiments, the present disclosure repair process may utilize one or more caul plates/elements to facilitate the formation of a desired thermoplastic surface (e.g., an aerodynamic surface) as part of the repair process.

In those instances where the energy input into the heating element 28 is controlled in an automated manner, a controller 34 may be used to control the energy output from the heating element energy source 32 into the heating element 28, the rate at which the heating element 28 is heated, the duration that the heating element 28 is used to produce thermal energy, and any other operational parameters that may be applicable. The controller 34 is in communication with heating element energy source 32 and depending on the present disclosure system configuration, may also be in communication with one or more temperature sensors 36 configured to directly or indirectly sense the temperature at the interface between the patch 26 and the thermoplastic component 20, or the heating element 28, or both, a timer, and the like to control and or receive signals therefrom to perform the functions described herein. The controller 34 may include any type of computing device, computational circuit, processor(s), CPU, computer, or the like capable of executing a series of instructions that are stored in memory. The controller 34 may be configured as hardware or software or any combination thereof. The instructions may include an operating system, and/or executable software modules such as program files, system data, buffers, drivers, utilities, and the like. The executable instructions may apply to any functionality described herein to enable the system to accomplish the same algorithmically and/or coordination of system components. The controller 34 may include a single memory device or a plurality of memory devices and the present disclosure is not limited to any particular type of memory device.

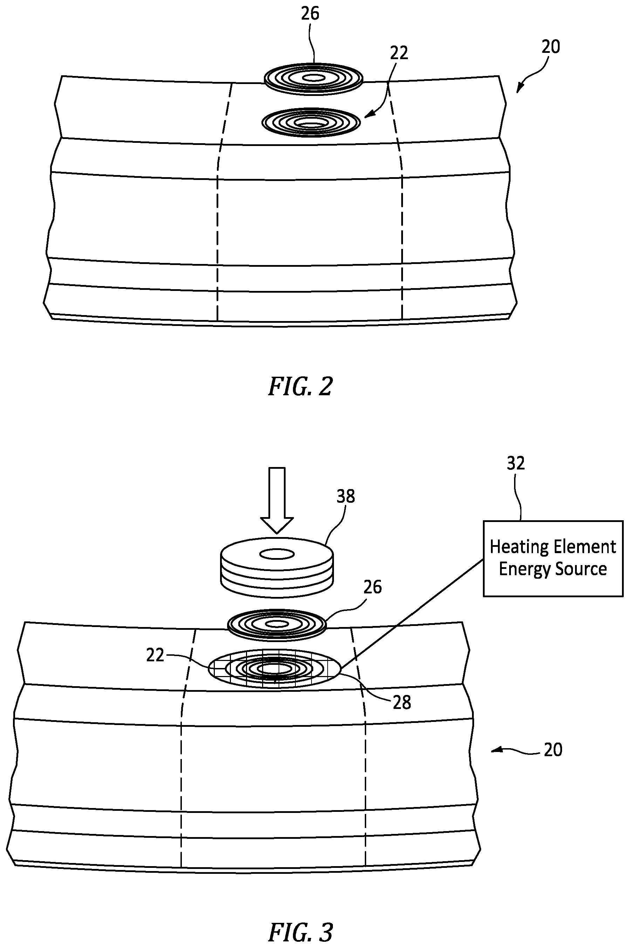

A first example of the present disclosure repair method may be described using the thermoplastic component 20 shown in FIGS. 2 and 3. Referring to FIG. 2, a thermoplastic component 20 is shown having a defect region 22 exposed on a surface of the thermoplastic component 20. The defect region 22 is shown diagrammatically with a centrally located void and a shallow depression area disposed around the centrally located void. As stated above, pursuant to the present disclosure method the defect region 22 may have been subjected to preparation steps such as initially cleaning the defect region 22 to remove debris and/or contaminants, removal of material to open up the centrally located void and surrounding area to facilitate the receipt of thermoplastic patch material, surface preparation (e.g., smoothing or roughening the contact surfaces of the defect region 22), and a final cleaning step to remove debris and/or contaminants from the defect region 22. FIG. 2 illustrates a thermoplastic patch 26 sized to mate with the defect region 22 disposed above the defect region 22 to illustrate the relative geometric configurations. FIG. 3 diagrammatically illustrates the thermoplastic component 20 with the defect region 22 in form for repair, and a thermoplastic patch 26 and heating element 28 disposed above and aligned with the defect region 22. A weighted object 38 (e.g., a plurality of weighted rings) is shown disposed above the thermoplastic patch 26 to apply localized force to the patch 26 and the heating element 28. Hence, the aforesaid elements are shown in an exploded stacked arrangement above the defect region 22: the weighted object 38 above the thermoplastic patch 26 and the patch 26 above the heating element 28, and all aligned with the defect region 22. To perform the repair, the heating element 28 and the patch 26 are placed in contact with the defect region 22 and the weighted object 38 is placed in contact with the patch 26 to apply localized force pressing the patch 26 and heating element 28 into contact with the TC contact surfaces 24. In some embodiments a sheet of release material (not shown) may be disposed between the weighted object 38 and the thermoplastic patch 26 to prevent attachment there between. The weighted object 38 is a non-limiting example of how a localized force may be applied to the thermoplastic patch 26 during the repair process. In some embodiments, a vacuum bag may be used to apply force to the thermoplastic patch 26 during the repair process. As stated above, the heating element 28 may be pre-conformed to mate with the TC contact surfaces 24 defining the defect region 22 or may be sufficiently flexible to conform to the TC contact surfaces 24 upon application of localized force, or some combination thereof. The weight of the weighted object 38 may be chosen to produce sufficient localized force to ensure intimate contact between the TC contact surfaces 24, the heating element 28, and the TP contact surfaces 30 of the patch 26. The heating element 28 may also be configured larger than the defect region 22 to expose a portion of the heating element 28 above the defect region 22. The exposed portion of the heating element 28 may facilitate the connection of the heating element 28 to the heating element energy source 32 during the joining process. The heating element energy source 32 is controlled to cause the heating element 28 to produce thermal energy which in turn raises the temperature of the TC contact surfaces 24 and the TP contact surfaces 30. More specifically, the heating element 28 is controlled to raise the temperature of the TC contact surfaces 24 and the TP contact surfaces 30 to a point where the TC contact surfaces 24 and the TP contact surfaces 30 bond with one another. In those embodiments where the thermoplastic patch 26 has a lower melting temperature, the heating element 28 raises the temperature of the TP contact surfaces 30 to at least the melting temperature of the patch material. As the patch material local to the TP contact surfaces 30 melts, patch material migrates through the perforations in the heating element 28 (e.g., through the screen) and into contact with the TC contact surfaces 24 defining the defect region 22. The heating element 28 is maintained at a temperature for a time period adequate for bonding to occur between the thermoplastic patch 26 and the thermoplastic component 20. Once sufficient bonding has occurred, the energy source 32 is controlled to cease heating of the heating element 28 and the repaired defect region 22 is allowed to cool. After sufficient cooling, the weighted object 38 is removed. In some instances, the repaired defect region 22 may be subject to post-repair processing to remove any excess patch material that may exist as well as any exposed heating element 28 and thereby leave a repaired region 22 that conforms with the surrounding surfaces of the thermoplastic component 20.

A second example of the present disclosure repair method may be described using the thermoplastic component 20 shown in FIGS. 4-6. Referring to FIG. 4, a thermoplastic component 20 is shown having a defect region 22 (e.g., a crack) exposed on a surface of the thermoplastic component 20. In this example, the defect region 22 is processed to remove the entirety of the crack and to open up the void to facilitate the receipt of thermoplastic patch material, and subsequently cleaned to remove debris and/or contaminants from the defect region 22. FIG. 5 diagrammatically illustrates the defect region 22 processed to receive the heating element 28 and the thermoplastic patch 26, and a heating element 28 and patch 26 disposed above and aligned with the prepared defect region 22. FIG. 6 illustrates the heating element 28 and patch 26 disposed within the prepared defect region 22 with localized force 40 diagrammatically applied. As stated above, the heating element 28 may be pre-formed to mate with the TC contact surfaces 24 or may be sufficiently flexible to conform to the TC contact surfaces 24 upon application of localized force 40, or some combination thereof. Also, as stated above, the void may be prepared with a "stock" configuration to permit the use of a predetermined/stock patch 26 geometry.

Sufficient localized force 40 is applied to ensure intimate contact between the TC contact surfaces 24, the heating element 28, and the TP surfaces of the patch 26. The heating element 28 is shown as being larger than the defect region 22 to expose a portion of the heating element 28 above the defect region 22 and to ensure the presence of heating element 28 between all of the TC contact surface 24 and TP contact surface interfaces. The exposed portion of the heating element 28 is in communication with the heating element energy source 32. In this example, the heating element energy source 32 is in turn in communication with a controller 34 and the controller 34 is in communication with a temperature sensor 36. The stored instructions accessible by the controller 34 may include data relating sensed temperature and thermoplastic patch material melting temperatures, and the amount of time necessary to produce the desired bonding between the TC contact surfaces 24 of the defect region 22 and the TP contact surfaces 30 of the patch 26. Hence, the controller 34 may be utilized to automate at least portions of the repair process. The heating element energy source 32 is controlled to cause the heating element 28 to produce sufficient thermal energy to raise the temperature of the TC contact surfaces 24 and the TP contact surfaces 30 to a point where the TC contact surfaces 24 and the TP contact surfaces 30 bond with one another. Once sufficient bonding has occurred, the energy source 32 is controlled to cease heating of the heating element 28 and the repaired defect region 22 is allowed to cool. After sufficient cooling, the localized force 40 is removed. The repaired defect region 22 may then be subject to post-repair processing to remove any excess patch material that may exist as well as any exposed heating element 28 and thereby leave a repaired region 22 that conforms with the surrounding surfaces of the thermoplastic component 20.

As is evident from the description above, the present disclosure method provides a repair of a thermoplastic component 20 that does not utilize any additional material at the interface between the thermoplastic patch 26 and the thermoplastic component defect region 22; e.g., no adhesives, composite fillers, films, or coatings, or the like that increase the difficulty and/or cost of the repair, and that may provide a failure mechanism if improperly executed. At least a portion of the heating element 28 remains at the interface between the TC contact surfaces 24 and the TP contact surfaces 30, but the bond between the TC contact surfaces 24 and the TP contact surfaces 30 is direct. In addition, the present disclosure repair method only utilizes a localized force applied from a single direction. Hence, the present disclosure method may be utilized in those applications wherein it is not possible or is burdensome to apply force from opposite sides of the thermoplastic patch 26 and the thermoplastic component defect region 22 interface.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method of repairing a defect region (22) of a thermoplastic component (20), the thermoplastic component (20) comprises a thermoplastic material in the defect region (22) having a first melting temperature, wherein the defect region (22) of the thermoplastic component (20) has at least one thermoplastic contact surface (TC contact surface) (24), the method comprising:
providing a patch (26) comprising a second thermoplastic material having a second melting temperature that is below the first melting temperature, wherein the patch includes at least one patch contact surface (TP contact surface) (30);
disposing at least a first portion of a heating element (28) between the at least one TC contact surface (24) and the at least one TP contact surface (30), the first portion of the heating element (28) having a plurality of perforations, and the heating element (28) operable to increase in temperature as a result of electrical resistance;
applying a localized force directed to force the at least one TP surface (30) of the patch toward the at least one TC surface (24) of the defect region of the thermoplastic component (20); and
inputting an amount of energy into the heating element (28) sufficient to cause the heating element (28) to heat the at least one TP surface (30) to an elevated temperature equal to or above the second melting temperature and to maintain the elevated temperature for a period of time sufficient to produce bonding between the defect region (22) of the thermoplastic component (20) and the patch (26).

2. The method of claim 1, wherein the at least one TP surface (30) of the patch is configured to mate with the at least one TC surface (24) of the defect region (22) of the thermoplastic component (20).

3. The method of claims 1 or 2, wherein the step of providing the patch (26) includes producing said patch (26) with a geometric configuration that mates with a void in the defect region (22) of the thermoplastic component (20).

4. The method of any preceding claim, wherein the method further includes preparing the defect region (22) of the thermoplastic component (20) to form the at least one TC surface (24) of the defect region (22).

5. The method of claim 4, wherein the step of preparing the defect region (22) of the thermoplastic component (20) to form the at least one TC surface (24) of the defect region (22), includes producing a void in the defect region of the thermoplastic component (20) having a first geometric configuration that mates with a second geometric configuration of the patch (26).

6. The method of any preceding claim, wherein the localized force is applied to a surface of the patch (26), and is optionally produced by a weighted object resting on the surface of the patch (26).

7. The method of claim any preceding claim, wherein the heating element (28) comprises a metallic material and the heating element (28) is optionally configured as a mesh.

8. The method of any preceding claim, wherein the step of inputting an amount of energy into the heating element (28) utilizes a heating element energy source (32) that selectively directly provides electrical energy to the heating element (28).

9. The method of any of claims 1 to 7, wherein the step of inputting an amount of energy into the heating element (28) utilizes a heating element energy source (32) that selectively indirectly provides electrical energy to the heating element (28).

10. The method of any preceding claim, wherein the patch (26) comprising the second thermoplastic material is configured as a homogeneous body.

11. The method of any of claims 1 to 9, wherein the patch (26) comprising the second thermoplastic material includes a plurality of layers.

12. The method of any of claims 1 to 9 and 11, wherein the step of providing the patch (26) includes stacking individual plies within a void disposed in the defect region (22) of the thermoplastic component (20) and wherein one or more of the individual plies is optionally configured to mate with the void disposed in the defect region (22).

13. The method of any preceding claim, wherein the heating element (28) includes a second portion that is exposed when the at least one TP surface (30) of the patch (22) is forced toward the at least one TC surface (24) of the defect region (20) of the thermoplastic component (20).

14. The method of any preceding claim, wherein the first portion of the heating element (28) is configured to mate with a void disposed in the defect region (22) of the thermoplastic component (20).

15. A system for repairing a defect region (22) of a thermoplastic component (20), the system comprising:
a thermoplastic component (20) comprising a thermoplastic material in a defect region (22) having a first melting temperature, wherein the defect region (22) of a thermoplastic component (20) has at least one thermoplastic contact surface (TC contact surface) (24);
a patch (26) comprising a second thermoplastic material having a second melting temperature that is below the first melting temperature, wherein the patch (26) includes at least one patch contact surface (TP contact surface) (30);
a heating element (28) having a plurality of perforations, the heating element (28) operable to increase in temperature as a result of electrical resistance;
a heating element energy source (32) in communication with the heating element (28), the heating element energy source (32) configured to selectively provide electrical energy to the heating element (28);
a body (38) configured to produce localized force to the patch (26) in a manner that forces the at least one TP surface of the patch (30) toward the at least one TC surface (24) of the defect region (22) of the thermoplastic component (20); and
a controller (34) in communication with the heating element energy source (32) and a non-transitory memory storing instructions, which instructions when executed cause the controller (34) to control the heating element energy source (32) to:
selectively input electrical energy to the heating element (28) and thereby cause the heating element (28) to produce thermal energy as a result of electrical resistance;
cause the heating element (28) to produce an amount of the thermal energy sufficient to heat the at least one TP surface (30) to an elevated temperature equal to or above the second melting temperature and to maintain the elevated temperature for a period of time sufficient to produce bonding between the defect region (22) of the thermoplastic component (20) and the patch (26); and
terminate the electrical energy input into the heating element (28) after the period of time.

## Patentansprüche

1. Verfahren zum Reparieren eines Defektbereichs (22) einer thermoplastischen Komponente (20), wobei die thermoplastische Komponente (20) in dem Defektbereich (22) ein thermoplastisches Material mit einer ersten Schmelztemperatur umfasst, wobei der Defektbereich (22) der thermoplastischen Komponente (20) mindestens eine thermoplastische Kontaktfläche (TC-Kontaktfläche) (24) aufweist, wobei das Verfahren umfasst:
Bereitstellen eines Flickens (26), der ein zweites thermoplastisches Material mit einer zweiten Schmelztemperatur umfasst, die unterhalb der ersten Schmelztemperatur liegt, wobei der Flicken mindestens eine Flickenkontaktfläche (TP-Kontaktfläche) (30) umfasst;
Anordnen mindestens eines ersten Abschnitts eines Heizelements (28) zwischen der mindestens einen TC-Kontaktfläche (24) und der mindestens einen TP-Kontaktfläche (30), wobei der erste Abschnitt des Heizelements (28) eine Vielzahl von Perforationen aufweist und das Heizelement (28) dazu betreibbar ist, sich infolge elektrischen Widerstands in der Temperatur zu erhöhen; Aufbringen einer lokalisierten Kraft, die darauf gerichtet ist, die mindestens eine TP-Oberfläche (30) des Flickens gegen die mindestens eine TC-Oberfläche (24) des Defektbereichs der thermoplastischen Komponente (20) zu drücken; und
Einbringen einer Energiemenge in das Heizelement (28), die ausreicht, um zu bewirken, dass das Heizelement (28) die mindestens eine TP-Oberfläche (30) auf eine erhöhte Temperatur erwärmt, die gleich oder größer als die zweite Schmelztemperatur ist, und die erhöhte Temperatur für einen Zeitraum aufrechterhält, der ausreicht, um eine Verbindung zwischen dem Defektbereich (22) der thermoplastischen Komponente (20) und dem Flicken (26) herzustellen.

2. Verfahren nach Anspruch 1, wobei die mindestens eine TP-Oberfläche (30) des Flickens dazu konfiguriert ist, mit der mindestens einen TC-Oberfläche (24) des Defektbereichs (22) der thermoplastischen Komponente (20) zusammenzupassen.

3. Verfahren nach Anspruch 1 oder 2, wobei der Schritt des Bereitstellens des Flickens (26) das Herstellen des Flickens (26) mit einer geometrischen Konfiguration umfasst, die mit einem Hohlraum in dem Defektbereich (22) der thermoplastischen Komponente (20) zusammenpasst.

4. Verfahren nach einem der vorhergehenden Ansprüche, wobei das Verfahren ferner das Vorbereiten des Defektbereichs (22) der thermoplastischen Komponente (20) umfasst, um die mindestens eine TC-Oberfläche (24) des Defektbereichs (22) zu bilden.

5. Verfahren nach Anspruch 4, wobei der Schritt des Vorbereitens des Defektbereichs (22) der thermoplastischen Komponente (20), um die mindestens eine TC-Oberfläche (24) des Defektbereichs (22) zu bilden, das Erzeugen eines Hohlraums in dem Defektbereich der thermoplastischen Komponente (20) mit einer ersten geometrischen Konfiguration umfasst, die mit einer zweiten geometrischen Konfiguration des Flickens (26) zusammenpasst.

6. Verfahren nach einem der vorhergehenden Ansprüche, wobei die lokalisierte Kraft auf eine Oberfläche des Flickens (26) aufgebracht wird und optional durch einen auf der Oberfläche des Flickens (26) ruhenden beschwerten Gegenstand erzeugt wird.

7. Verfahren nach Anspruch einem der vorhergehenden Ansprüche, wobei das Heizelement (28) ein metallisches Material umfasst und das Heizelement (28) optional als Gitter ausgebildet ist.

8. Verfahren nach einem der vorhergehenden Ansprüche, wobei der Schritt des Einbringens einer Energiemenge in das Heizelement (28) eine Heizelement-Energiequelle (32) verwendet, die dem Heizelement (28) selektiv direkt elektrische Energie zuführt.

9. Verfahren nach einem der Ansprüche 1 bis 7, wobei der Schritt des Einbringens einer Energiemenge in das Heizelement (28) eine Heizelement-Energiequelle (32) verwendet, die dem Heizelement (28) selektiv indirekt elektrische Energie zuführt.

10. Verfahren nach einem der vorhergehenden Ansprüche, wobei der Flicken (26), der das zweite thermoplastische Material umfasst, als homogener Körper ausgebildet ist.

11. Verfahren nach einem der Ansprüche 1 bis 9, wobei der Flicken (26), der das zweite thermoplastische Material umfasst, eine Vielzahl von Schichten umfasst.

12. Verfahren nach einem der Ansprüche 1 bis 9 und 11, wobei der Schritt des Bereitstellens des Flickens (26) das Stapeln einzelner Lagen in einem Hohlraum umfasst, der in dem Defektbereich (22) der thermoplastischen Komponente (20) angeordnet ist, und wobei eine oder mehrere der einzelnen Lagen optional dazu konfiguriert sind, mit dem in dem Defektbereich (22) angeordneten Hohlraum zusammenzupassen.

13. Verfahren nach einem der vorhergehenden Ansprüche, wobei das Heizelement (28) einen zweiten Abschnitt umfasst, der freigelegt wird, wenn die mindestens eine TP-Oberfläche (30) des Flickens (22) gegen die mindestens eine TC-Oberfläche (24) des Defektbereichs (20) der thermoplastischen Komponente (20) gedrückt wird.

14. Verfahren nach einem der vorhergehenden Ansprüche, wobei der erste Abschnitt des Heizelements (28) dazu konfiguriert ist, mit einem in dem Defektbereich (22) der thermoplastischen Komponente (20) angeordneten Hohlraum zusammenzupassen.

15. System zum Reparieren eines Defektbereichs (22) einer thermoplastischen Komponente (20), wobei das System umfasst:
eine thermoplastische Komponente (20), die ein thermoplastisches Material in einem Defektbereich (22) mit einer ersten Schmelztemperatur umfasst, wobei der Defektbereich (22) einer thermoplastischen Komponente (20) mindestens eine thermoplastische Kontaktfläche (TC-Kontaktfläche) (24) aufweist;
einen Flicken (26), der ein zweites thermoplastisches Material mit einer zweiten Schmelztemperatur umfasst, die unterhalb der ersten Schmelztemperatur liegt, wobei der Flicken (26) mindestens eine Flickenkontaktfläche (TP-Kontaktfläche) (30) umfasst;
ein Heizelement (28), das eine Vielzahl von Perforationen aufweist, wobei das Heizelement (28) dazu betreibbar ist, sich infolge elektrischen Widerstands in der Temperatur zu erhöhen;
eine Heizelement-Energiequelle (32) in Verbindung mit dem Heizelement (28), wobei die Heizelement-Energiequelle (32) dazu konfiguriert ist, dem Heizelement (28) selektiv elektrische Energie zuzuführen;
einen Körper (38), der dazu konfiguriert ist, eine lokalisierte Kraft auf den Flicken (26) auf eine Weise zu erzeugen, die die mindestens eine TP-Oberfläche des Flickens (30) gegen die mindestens eine TC-Oberfläche (24) des Defektbereichs (22) der thermoplastischen Komponente (20) drückt; und
eine Steuerung (34) in Verbindung mit der Heizelement-Energiequelle (32) und einem nichttransitorischen Speicher, der Anweisungen speichert, wobei die Anweisungen bei Ausführung die Steuerung (34) veranlassen, die Heizelement-Energiequelle (32) so zu steuern, dass sie:
dem Heizelement (28) selektiv elektrische Energie zuführt und dadurch bewirkt, dass das Heizelement (28) infolge elektrischen Widerstands thermische Energie erzeugt;
bewirkt, dass das Heizelement (28) eine Menge der thermischen Energie erzeugt, die ausreicht, um die mindestens eine TP-Oberfläche (30) auf eine erhöhte Temperatur zu erwärmen, die gleich oder größer als die zweite Schmelztemperatur ist, und die erhöhte Temperatur für einen Zeitraum aufrechtzuerhalten, der ausreicht, um eine Verbindung zwischen dem Defektbereich (22) der thermoplastischen Komponente (20) und dem Flicken (26) herzustellen; und
die Zufuhr elektrischer Energie in das Heizelement (28) nach dem Zeitraum beendet.

## Revendications

1. Procédé de réparation d'une région défectueuse (22) d'un composant thermoplastique (20), le composant thermoplastique (20) comprend un matériau thermoplastique dans la région défectueuse (22) ayant une première température de fusion, dans lequel la région défectueuse (22) du composant thermoplastique (20) a au moins une surface de contact thermoplastique (surface de contact TC) (24), le procédé comprenant :
la fourniture d'un timbre (26) comprenant un second matériau thermoplastique ayant une seconde température de fusion qui est inférieure à la première température de fusion, dans lequel le timbre comporte au moins une surface de contact de timbre (surface de contact TP) (30) ;
la disposition d'au moins une première partie d'un élément chauffant (28) entre l'au moins une surface de contact TC (24) et l'au moins une surface de contact TP (30), la première partie de l'élément chauffant (28) ayant une pluralité de perforations, et l'élément chauffant (28) pouvant fonctionner pour augmenter en température en résultat d'une résistance électrique ;
l'application d'une force localisée dirigée pour forcer l'au moins une surface TP (30) du timbre vers l'au moins une surface TC (24) de la région défectueuse du composant thermoplastique (20) ; et
l'entrée d'une quantité d'énergie dans l'élément chauffant (28) suffisante pour amener l'élément chauffant (28) à chauffer l'au moins une surface TP (30) à une température élevée égale ou supérieure à la seconde température de fusion et à maintenir la température élevée pendant une période de temps suffisante pour produire une liaison entre la région défectueuse (22) du composant thermoplastique (20) et le timbre (26).

2. Procédé selon la revendication 1, dans lequel l'au moins une surface TP (30) du timbre est configurée pour s'accoupler avec l'au moins une surface TC (24) de la région défectueuse (22) du composant thermoplastique (20).

3. Procédé selon les revendications 1 ou 2, dans lequel l'étape de fourniture du timbre (26) comporte la production dudit timbre (26) avec une configuration géométrique qui s'accouple avec un vide dans la région défectueuse (22) du composant thermoplastique (20).

4. Procédé selon une quelconque revendication précédente, dans lequel le procédé comporte en outre la préparation de la région défectueuse (22) du composant thermoplastique (20) pour former l'au moins une surface TC (24) de la région défectueuse (22).

5. Procédé selon la revendication 4, dans lequel l'étape de préparation de la région défectueuse (22) du composant thermoplastique (20) pour former l'au moins une surface TC (24) de la région défectueuse (22), comporte la production d'un vide dans la région défectueuse du composant thermoplastique (20) ayant une première configuration géométrique qui s'accouple avec une seconde configuration géométrique du timbre (26).

6. Procédé selon une quelconque revendication précédente, dans lequel la force localisée est appliquée à une surface du timbre (26), et est éventuellement produite par un objet lesté reposant sur la surface du timbre (26).

7. Procédé selon une quelconque revendication précédente, dans lequel l'élément chauffant (28) comprend un matériau métallique et l'élément chauffant (28) est éventuellement configuré comme une maille.

8. Procédé selon une quelconque revendication précédente, dans lequel l'étape d'introduction d'une quantité d'énergie dans l'élément chauffant (28) utilise une source d'énergie (32) d'élément chauffant qui fournit sélectivement et directement de l'énergie électrique à l'élément chauffant (28).

9. Procédé selon l'une quelconque des revendications 1 à 7, dans lequel l'étape d'introduction d'une quantité d'énergie dans l'élément chauffant (28) utilise une source d'énergie (32) d'élément chauffant qui fournit sélectivement et indirectement de l'énergie électrique à l'élément chauffant (28).

10. Procédé selon une quelconque revendication précédente, dans lequel le timbre (26) comprenant le second matériau thermoplastique est configuré comme un corps homogène.

11. Procédé selon l'une quelconque des revendications 1 à 9, dans lequel le timbre (26) comprenant le second matériau thermoplastique comporte une pluralité de couches.

12. Procédé selon l'une quelconque des revendications 1 à 9 et 11, dans lequel l'étape de fourniture du timbre (26) comporte l'empilement de plis individuels au sein d'un vide disposé dans la région défectueuse (22) du composant thermoplastique (20) et dans lequel un ou plusieurs des plis individuels sont éventuellement configurés pour s'accoupler avec le vide disposé dans la région défectueuse (22).

13. Procédé selon une quelconque revendication précédente, dans lequel l'élément chauffant (28) comporte une seconde partie qui est exposée lorsque l'au moins une surface TP (30) du timbre (22) est forcée vers l'au moins une surface TC (24) de la région défectueuse (20) du composant thermoplastique (20).

14. Procédé selon une quelconque revendication précédente, dans lequel la première partie de l'élément chauffant (28) est configurée pour s'accoupler avec un vide disposé dans la région défectueuse (22) du composant thermoplastique (20).

15. Système de réparation d'une région défectueuse (22) d'un composant thermoplastique (20), le système comprenant :
un composant thermoplastique (20) comprenant un matériau thermoplastique dans une région défectueuse (22) ayant une première température de fusion, dans lequel la région défectueuse (22) d'un composant thermoplastique (20) a au moins une surface de contact thermoplastique (surface de contact TC) (24) ;
un timbre (26) comprenant un second matériau thermoplastique ayant une seconde température de fusion qui est inférieure à la première température de fusion, dans lequel le timbre (26) comporte au moins une surface de contact de timbre (surface de contact TP) (30) ;
un élément chauffant (28) ayant une pluralité de perforations, l'élément chauffant (28) pouvant fonctionner pour augmenter en température en résultat d'une résistance électrique ;
une source d'énergie (32) d'élément chauffant en communication avec l'élément chauffant (28), la source d'énergie (32) d'élément chauffant étant configurée pour fournir sélectivement de l'énergie électrique à l'élément chauffant (28) ;
un corps (38) configuré pour produire une force localisée sur le timbre (26) de manière à forcer l'au moins une surface TP du timbre (30) vers l'au moins une surface TC (24) de la région défectueuse (22) du composant thermoplastique (20) ; et
un dispositif de commande (34) en communication avec la source d'énergie (32) d'élément chauffant et une mémoire non transitoire stockant des instructions, lesquelles instructions, lorsqu'elles sont exécutées, amènent le dispositif de commande (34) à commander à la source d'énergie (32) d'élément chauffant de :
entrer sélectivement de l'énergie électrique dans l'élément chauffant (28) et ainsi amener l'élément chauffant (28) à produire de l'énergie thermique en résultat d'une résistance électrique ;
amener l'élément chauffant (28) à produire une quantité de l'énergie thermique suffisante pour chauffer l'au moins une surface TP (30) à une température élevée égale ou supérieure à la seconde température de fusion et à maintenir la température élevée pendant une période de temps suffisante pour produire une liaison entre la région défectueuse (22) du composant thermoplastique (20) et le timbre (26) ; et
interrompre l'entrée d'énergie électrique dans l'élément chauffant (28) après la période de temps.
